Europäisches Patentamt

European Patent Office

Office européen des brevets

(19)

(11) Veröffentlichungsnummer: **0 035 717**
A2

(12) # EUROPÄISCHE PATENTANMELDUNG

(21) Anmeldenummer: **81101428.1**

(51) Int. Cl.³: **H 02 K 7/12**

(22) Anmeldetag: **27.02.81**

(30) Priorität: **06.03.80 DE 3008615**

(43) Veröffentlichungstag der Anmeldung:
**16.09.81 Patentblatt 81/37**

(84) Benannte Vertragsstaaten:
**AT BE CH DE FR GB IT LI LU NL SE**

(71) Anmelder: **Heinrich Baumüller Fabrik für Elektrotechnik GmbH.**
**Ostendstrasse 80**
**D-8500 Nürnberg 30(DE)**

(72) Erfinder: **Kolb, Hermann**
**Forstweg 6**
**D-8500 Nürnberg 60(DE)**

(74) Vertreter: **Patentanwälte Czowalla . Matschkur + Partner**
**Königstrasse 1**
**D-8500 Nürnberg(DE)**

(54) **Bremsmotor mit axial verschiebbarem Rotor.**

(57) Bremsmotor mit axial verschiebbarem Rotor und einer an einer Stirnfläche des Rotors angeordneten, mit diesem gegen eine Reibfläche am Lagerschild andrückbaren Bremsfläche, wobei der Lagerschild axial verstellbar am Gehäuse angeschraubt und mittels einer Arretiervorrichtung in unterschiedlichen Drehstellungen feststellbar ist.

./...

EP 0 035 717 A2

FIG. 1

# CZOWALLA·MATSCHKUR & PARTNER
## PATENTANWÄLTE

ZUGELASSENE VERTRETER VOR DEM EUROPÄISCHEN PATENTAMT
EUROPEAN PATENT ATTORNEYS

0035717

| | |
|---|---|
| DR. M. SCHNEIDER | 1928-1977 |
| DR. A. EITEL | 1937-1979 |
| ERNST CZOWALLA | DIPL.-ING / DIPL.-LDW |
| PETER MATSCHKUR | DIPL.-PHYS. |

**D-8500 NÜRNBERG 106**  23. 2. 1981
**KÖNIGSTRASSE 1**

TELEFON: (0911) 20 39 31, 20 90 35
TELEX: 622 949 noris d
TELEGRAMME: NORISPATENT

IHR ZEICHEN:
UNSER ZEICHEN:  30 797/29-Rl.

Heinrich Baumüller Fabrik für Elektrotechnik GmbH.,
Ostendstraße 80, 8500 Nürnberg 30
-----------------------------------------------------

"Bremsmotor mit axial verschiebbarem Rotor"

Die Erfindung bezieht sich auf einen Bremsmotor mit axial verschiebbarem Rotor und einer an einer Stirnseite des Rotors angeordneten, mit diesem gegen eine Reibfläche am Lagerschild andrückbaren Bremsfläche.

Bei derartigen Bremsmotoren, die eine verkürzte Auslaufzeit aufweisen, steht der Rotor unter der Wirkung einer ihn in die Bremsstellung verschiebenden Feder, wobei die Feder so dimensioniert ist, daß ihre Federkraft kleiner ist als die magnetische Zugkraft, die in entgegengesetzter Richtung wirkend denLäufer in den Ständer hineinzieht. Beim Abschalten des Motors entfällt diese magnetische Zugkraft, so daß aufgrund der Federwirkung der Rotor axial verschoben wird. Dadurch gelangt die Bremsscheibe in Eingriff mit der Reibfläche und die Drehung des Rotors wird rasch und wirksam abgebremst.

Deutsche Bank A.G. Nürnberg Nr. 330 688, BLZ 760 700 12  —  Hypobank Nürnberg Nr. 1 560 274 501, BLZ 760 202 14 / S.W.I F.T. HYPO DE MM 760
Postscheck-Konto: Amt Nürnberg Nr. 383 05-855

Der unvermeidliche Belagverschleiß führt bei zylindrischen Rotoren zu einer kleiner werdenden aktiven Baulänge, bei Konusankern - konische Läufer weisen eine größere magnetische Zugkraft auf,was wiederum den Einsatz stärkerer Federn und damit ein höheres Bremsmoment ermöglicht - ergibt sich zusätzlich ein größer werdender Luftspalt. Beides führt zu einem Rückgang der magnetischen Zugkraft.

Um diese Funktionsbeeinträchtigung durch den Belagverschleiß zu kompensieren, muß die Reibfläche im Lagerschild immer wieder zum Rotor hin nachgestellt werden. Bei den bislang bekannten Bremsmotoren werden zu diesem Zweck Unterlegbleche und Justierschrauben verwendet, um die Reibfläche des Bremsbelags am Lagerschild immer in der gleichen axialen Ebene zu halten bzw. in diese nachzustellen. Bei dieser Art der Nachstellung ist es jedoch sehr nachteilig, daß das Justieren an mehreren Stellen erfolgen muß, wobei die Bremsfläche mit hoher Genauigkeit parallel verstellt werden muß, um nicht eine verkantete Anordnung gegenüber der Bremsfläche des Rotors zu erhalten. Dies erfordert jeweils ein sehr aufwendiges Nachmessen.

Der Erfindung liegt daher die Aufgabe zugrunde, einen Bremsmotor derart auszubilden,daß der Ausgleich des Belagverschleisses sehr einfach und ohne umständliches Nachmessen erfolgen kann.

Zur Lösung dieser Aufgabe ist ein Bremsmotor der eingangs genannten Art gemäß der Erfindung vorgesehen, daß der Lagerschild axial verstellbar am Gehäuse angeschraubt und mittels einer Arretiervorrichtung in unterschiedlichen Drehstellungen feststellbar ist.

Im Gegensatz zu den bisherigen Anordnungen, bei denen der Lagerschild mittels Schrauben undrehbar am Gehäuse festgelegt war, ergibt sich durch das Einschrauben des Lagerschildes die Möglichkeit, eine axiale Verstellung des Lagerschildes und damit der Stirnfläche (Reibfläche) des Bremsbelages durch einfaches Verdrehen des Lagerschildes zu erzielen. Nach erfolgter Einstellung braucht lediglich diese gewonnene Drehstellung durch eine Arretiervorrichtung fixiert zu werden.

Diese Arretiervorrichtung kann in beliebiger Weise, gegebenenfalls auch stufenlos arbeitend ausgebildet sein. Es hat sich dabei als besonders einfach und in der Praxis hervorragend wirksam gezeigt, wenn diese Arretiervorrichtung in Axialbohrungen des Gehäuses einschraubbare, den Lagerschild durchsetzende Feststellschrauben umfaßt, d.h. Feststellschrauben, wie sie auch bisher zur Befestigung des plan an der Stirnseite des Gehäuses anliegenden Lagerschildes verwendet worden sind.

Durch Vorsehen einer Mehrzahl von äquidistant über den Umfang verteilt angeordneten Feststellschrauben in Verbindung mit einer geringen Ganghöhe des Schraubgewindes des Lagerschildes läßt sich dabei eine sehr einfache Arretierung erzielen, die trotz der nicht stufenlosen Arretierbarkeit allen Ansprüchen an die Genauigkeit der Reibbelagjustierung genügt. Je kleiner die Ganghöhe des Gewindes ist, um so weniger Feststellschrauben und damit um so größere Winkel können zwischen den jeweiligen Arretierstellungen des Lagerschildes vorgesehen sein.

Mit besonderem Vorteil kann der Lagerschild mit einem in einen Innengewindeabschnitt des Gehäuses einschraubbaren Bund mit Außengewinde versehen sein, wobei dieser Bund sich im Falle der bevorzugten Ausbildung der Bremsfläche als Bremskonus unter Bildung der Reibfläche innenseitig ebenfalls konisch ausgebildet sein kann. Auf dieser konischen Innenfläche des Bundes ist dann ein Bremsbelag, vorzugsweise auswechselbar, befestigt.

Das Nachjustieren des Bremsbelages erfolgt bei der erfindungsgemäßen Anordnung dadurch, daß zunächst die Feststellschrauben gelöst werden und der Lagerschild soweit verdreht wird, bis der Bremsbelag an der Bremsfläche des Rotors anliegt. Anschließend wird er um eine definierte Zahl von Umdrehungen (bzw. eine bestimmte Teilumdrehung) zurückgedreht und in der zurückgedrehten Stellung durch Einschrauben der Feststellschrauben arretiert. Auf diese Weise läßt sich ohne jegliches Nachmessen und bei Gewährleistung einer absoluten Parallelität zwischen Bremsfläche des Rotors und Reibfläche des Bremsbelags am Lagerschild eine genaue Justierung erzielen, bei der immer das gleiche Spiel vorhanden ist. Diese besondere Einfachheit und Exaktheit der erfindungsgemäßen Nachstellung zum Ausgleich eines Belagverschleißes ermöglicht es darüber hinaus, dieses Nachstellen in wesentlichen geringeren Abständen, d.h. bereits bei geringerem Verschleiß durchzuführen, als es bei den bisherigen umständlichen Nachjustierungen der Fall war, wodurch sich besonders gute Betriebseigenschaften des Motors ergeben, da praktisch überhaupt kein Rückgang der magnetischen Zugkraft in Kauf genommen zu werden braucht.

Zur Ermöglichung des Abriebausgleichs durch axiale Verstellung des gesamten Motorschildes ist in Weiterbildung der Erfindung vorgesehen, daß die Rotorwelle frei in einer zentralen Hülse des Lagerschildes gelagert ist, wobei zur Verspannung des Lagers diesem und dem Lagerschild, vorzugsweise mehrere in Serie geschaltete Wellfedern zwischengeordnet sind.

Weitere Vorteile, Merkmale und Einzelheiten der Erfindung ergeben sich aus der nachfolgenden Beschreibung eines Ausführungsbeispiels sowie an Hand der Zeichnung. Dabei zeigen:

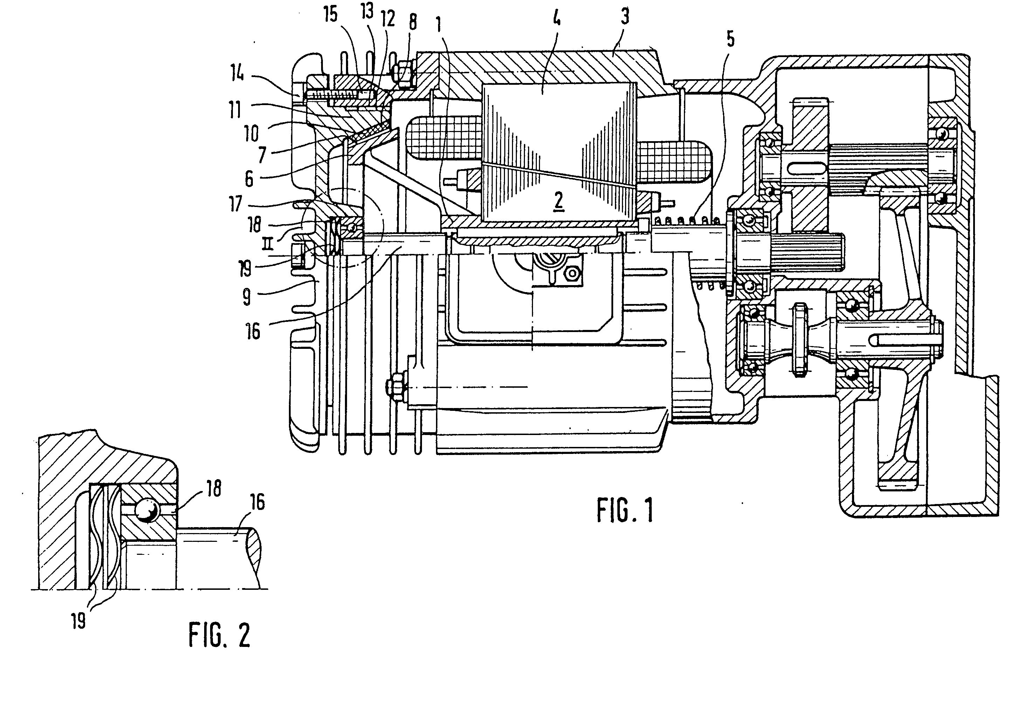

Fig. 1 einen axialen Schnitt durch einen erfindungsgemäßen Bremsmotor und

Fig. 2 einen vergrößerten Schnitt des Lagerbereichs II in Fig. 1.

Der erfindungsgemäße Bremsmotor - für das Verständnis der vorliegenden Erfindung nicht wesentliche Teile werden in der nachfolgenden Beschreibung nicht im einzelnen angesprochen und sind in der Zeichnung auch nicht mit Bezugszeichen versehen - umfaßt einen Rotor 1 mit einem konischen oder zylindrischen Kurzschlußläufer 2 und einem stationär im Gehäuse 3 untergebrachten Ständer 4 mit einer Drehstromwicklung. Der Rotor 1 ist axial verschiebbar gelagert und steht unter der Wirkung einer ihn aus dem Ständer 4 herausdrückenden Feder 5. Die Kraft dieser Feder 5 wird jedoch durch die vom Ständer auf den Läufer ausgeübte magnetische Zugkraft überwunden, so daß ein Herausdrücken des Rotors 1 aus dem Ständer durch die Kraft der Feder 5 nur bei abgeschaltetem Motor stattfinden kann. Am Rotor ist ein Bremsring 6 mit einer konischen Bremsfläche 7 befestigt, der eine ebenfalls konsiche Reibfläche 8 eines auswechselbar am Lagerschild 9 angebrachten Bremsbelags 10 gegenübersteht. Der Lagerschild 9 sit mit einem in das Gehäuse 3 eingreifenden Bund 11 mit Außengewinde 12 versehen, welches in einen Innengewindeabschnitt 13 des Gehäuses einschraubbar ist. Durch dieses Einschrauben läßt sich die axiale Stellung des Lagerschildes 9 und damit auch der Spalt zwischen der Bremsfläche 7 und der Reibfläche 8 einstellen. Die Arretierung des Lagerschildes 9 in der jeweiligen Drehstellung erfolgt durch äquidistant über den Umfang verteilte Feststellschrauben 14, die den Lagerschild durchsetzend in ebenso über den Umfang äquidistant verteilte Axialbohrungen 15 des Gehäuses 3 einschraubbar sind. Zahl und damit Winkelabstand der Feststellschrauben 14 und der Axialbohrungen 15 sind so auf die Ganghöhe der Gewindeabschnitte 12, 13 abgestellt, daß von Arretierstufe zu Arretierstufe eine Axialverstellung entsprechend der gewünschten Feinheit der Spalteinstellung zwischen der Bremsfläche 7 und der Reibfläche 8 erzielt werden kann.

Die Rotorwelle 16 ist frei im Lagerschild 9 gelagert, wobei das in einer zentralen Hülse 17 verschiebbare Lager 18 mittels in Serie geschalteten Wellfedern 19 verspannt wird. Auf diese Weise ist das notwendige Spiel bei der Lagerung gegeben, um Abnutzungen des Bremsbelages 10 und damit Änderungen des Spaltes zwischen Bremsfläche 7 und Reibfläche 8 unter Verdrehung des Lagerschildes 9 ausgleichen zu können.

0035717

- 1 -

Patentansprüche:

1. Bremsmotor mit axial verschiebbarem Rotor und einer an einer Stirnseite des Rotors angeordneten, mit diesem gegen eine Reibfläche am Lagerschild andrückbaren Bremsfläche, dadurch gekennzeichnet, daß der Lagerschild (9) axial verstellbar am Gehäuse (3) angeschraubt und mittels einer Arretiervorrichtung (14, 15) in unterschiedlichen Drehstellungen feststellbar ist.

2. Bremsmotor nach Anspruch 1, dadurch gekennzeichnet, daß die Arretiervorrichtung in Axialbohrungen (15) des Gehäuses (3) einschraubbare, den Lagerschild (9) durchsetzende Feststellschrauben (14) umfaßt.

3. Bremsmotor nach Anspruch 2, gekennzeichnet durch eine Mehrzahl von äquidistant über den Umfang verteilt angeordneten Feststellschrauben (14).

4. Bremsmotor nach einem der Ansprüche 1 bis 3, dadurch gekennzeichnet, daß der Lagerschild (9) mit einem in einen Innengewindeabschnitt (13) des Gehäuses (3) einschraubbaren Bund (11) mit Außengewinde (12) versehen ist.

5. Bremsmotor nach Anspruch 4, dadurch gekennzeichnet, daß die Bremsfläche (7) ein Bremskonus ist und daß der Bund (11) unter Bildung der Reibfläche (8) innenseitig konisch ausgebildet ist.

6. Bremsmotor nach Anspruch 5, dadurch gekennzeichnet, daß die Reibfläche (8) mit einem vorzugsweise auswechselbaren Bremsbelag (10) versehen ist.

- 2-

7. Bremsmotor nach einem der Ansprüche 1 bis 6, <u>dadurch</u> <u>gekennzeichnet</u>,daß die Rotorwelle (16) frei in einer zentralen Hülse (17) des Lagerschildes (9) gelagert ist, wobei zur Verspannung des Lagers (18) diesem und dem Lagerschild (9), vorzugsweise mehrere in Serie geschaltete, Wellfedern (19) zwischengeordnet sind.

FIG.1

FIG.2